# EUROPÄISCHE PATENTSCHRIFT

(11) **EP 0 326 903 B1**
(45) Veröffentlichungstag und Bekanntmachung des Hinweises auf die Patenterteilung: **23.03.1994**
(21) Anmeldenummer: 89101139.7
(22) Anmeldetag: 23.01.1989
(51) Int. Cl.: H02H 7/24

(54) **Schutzeinrichtung gegen Überspannungen**
Overvoltage protective device
Dispositif de protection contre des surtensions

(30) Priorität: 04.02.1988 DE 3803328
(43) Veröffentlichungstag der Anmeldung: 09.08.1989
(73) Patentinhaber: SIEMENS AKTIENGESELLSCHAFT, 80333 München (DE)
(72) Erfinder: Solleder, Reinhard, Dipl.-Ing.(FH), D-8411 Hainsacker (DE); Schmid, Reinhard, Dipl.-Ing., D-8400 Regensburg (DE)

(56) Entgegenhaltungen:
- EP-A- 0 071 956
- EP-A- 0 173 016
- DE-A- 3 029 453
- DE-A- 3 522 260

## Beschreibung

Die Erfindung bezieht sich auf eine Schutzeinrichtung gegen Überspannungen in elektrischen Anlagen, unter Einsatz von Varistoren in einem Nebenzweig, die ihrerseits durch eine Überwachungseinrichtung auf nicht betriebsmäßigen Anstieg des Leckstromes überwacht und die gegebenenfalls abgeschaltet werden. Bei einer derartigen bekannten Schutzeinrichtung (DE-A-35 22 260) sind die Überspannungsableiter durch eine Abschaltvorrichtung mit thermischem und/oder magnetischem Auslöser mit der Funktion einer Überwachungseinrichtung geschützt.

Eine andere bekannte Schutzeinrichtung (DE-B-30 29 453) arbeitet mit einem im Verbraucherstromkreis vorgeordneten Fehlerstromschutzschalter, der bei einem Ungleichgewicht der durch ihn hin- und rückfließenden Ströme infolge etwa defekter Überspannungsableiter abschaltet.

In elektrischen Energieversorgungsanlagen aller Spannungsebenen werden zunehmend Varistoren als Schutz bei Überspannungen eingesetzt, wie sie durch atmosphärische oder durch Schalthandlungen entstehen. Derartige Varistoren werden häufig direkt, ohne vorgeschaltete Funkenstrecke oder ohne eine parallel angeordnete Funkenstrecke in den Netzen eingesetzt. Durch Alterung oder Überlastung eines Varistors kann der Leckstrom bekanntlich stark ansteigen, was zu Störungen in der zu schützenden Anlage führen kann und den Anschlußpunkt des Varistors gegen Erde auf ein Bedienungspersonen gefährdendes Potential anheben kann. Die Überwachung des Varistors ist auch deshalb erforderlich, da er mit steigendem Leckstrom thermisch überlastet wird, was zu seiner Zerstörung führen kann.

Andererseits möchte man die Varistoren nicht unnötig bzw. fehlerbedingt abschalten, um den Schutz der Anlage nicht außer Funktion zu setzen.

Der Erfindung liegt die Aufgabe zugrunde, eine Schutzeinrichtung mit Varistoren zu entwickeln, deren Überwachung einerseits sicher ist, andererseits nicht zu unnötigem Abschalten führt.

Die Lösung der geschilderten Aufgabe erfolgt nach der Erfindung durch eine Schutzeinrichtung nach Patentanspruch. Unter Einsatz von Varistoren ordnet die Überwachungseinrichtung außer der Überschreitung eines bestimmten Leckstromes hierbei auch der Überschreitung einer bestimmten vorgegebenen Zeitdauer ein Auslösesignal zu, wobei beide in einem Und-Gatter verarbeitet werden, an dessen Ausgang das eigentliche Auslösesignal abgegeben wird, wobei für den Leckstrom eine Schwelle zwischen 0,1 bis 10 mA und für die Zeitdauer eine Schwelle zwischen 0,1 und 5 sek eingestellt wird.

Es ist ein Installationsgerät mit Überspannungsableitern bekannt (EP-A-0 071 956), bei dem unter Einsatz von Überstromauslösern, die ihrerseits durch eine Überwachungseinrichtung auf nicht betriebsmäßigen Anstieg eines Leckstromes überwacht werden, erst dann ein Auslösesignal für die Abschaltung gegeben wird, wenn ein bestimmter Leckstrom eine bestimmte vorgegebene Zeitdauer überschreitet. Es wird dort ein elektromagnetischer Schnellauslöser vorgesehen, der in seiner Auslösung um ein fest vorgegebenes Ausmaß zeitverzögert wird. Der Erfindung liegt jedoch die Erkenntnis zugrunde, daß es nicht genügt, bei einer Schutzeinrichtung, bei der Varistoren anstelle der Lichtbogenlöschkammer einer Funkenstrecke eingesetzt sind, die bei Varistoren typischen Gegebenheiten zu beachten, sondern daß das Separieren der Belastungen aus Strom und aus Zeit eine grundsätzlich vorteilhaftere Lösung ermöglicht. Die Probleme, die sich aus Alterung und Überlastung eines Varistors ergeben, mögen zwar hinlänglich bekannt sein, die Abhilfe nach der erfindungsgemäßen Schutzeinrichtung gegen Überspannungen berücksichtigt die Belastung aus Strom und Zeit jedoch gesondert bzw. separiert, und zwar durch bestimmte Einstellungsbereiche. Man kann hierbei unterschiedliche Varistoren durch gleichartige Lösungen gezielt berücksichtigen. Bei den auf dem Markt befindlichen Schutzeinrichtungen aus überwachten Überspannungsableitern werden im Fall des Einsatzes von Varistoren Strom und Zeit dagegen in integraler Weise berücksichtigt. Hiergegen weist die Erfindung einen neuen Weg.

Bei einer derartigen Schutzeinrichtung wird die Überwachungseinrichtung der Varistoren durch Überspannungen nicht fehlerhaft abgeschaltet. Das Überschreiten eines Schwellwerts für den Leckstrom bzw. Ableitstrom führt also erst dann zur Auslösung, wenn die Überschreitung des Leckstroms eine Schwelle A zwischen 0,1 bis 10 mA und für die Zeitdauer eine Schwelle B zwischen 0,1 und 5 sek überschreitet. Beispielsweise kann A = 1 mA und B = 1 sek sein. Die Überschreitung muß also Länger als eine vorbestimmte Zeitdauer vorliegen. Zulässig niedrige Leckströme können also ebensowenig zum Ansprechen der Überwachungseinrichtung führen wie hohe Ableitströme, die jedoch nur kurze Zeit auftreten.

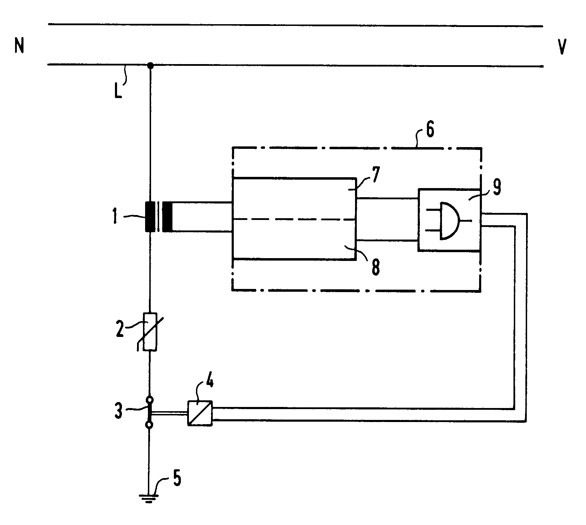

Die Erfindung soll nun anhand eines in der Zeichnung grob schematisch wiedergegebenen Ausführungsbeispiels näher erläutert werden:
Im Ausführungsbeispiel ist im Nebenzweig eines Verbrauchernetzes N, das zu einem Verbraucher V führt, eine Schutzeinrichtung gegen Überspannungen angeordnet. Der Phasenleiter L ist durch einen Wandler 1 und einen Varistor 2 sowie die Schaltkontakte 3 einer Abschaltvorrichtung 4 gegen Erde 5 geschaltet. Der Wandler 1 übersetzt die durch den Varistor 2 fließenden Ströme so, daß sie in einem günstigen Erfassungsbereich liegen. Andere Möglichkeiten, den durch den Varistor fließenden Strom zu ermitteln, sind beispielsweise Shunts.

Die Überwachungseinrichtung 6, im Ausführungsbeispiel im Sekundärkreis des Wandlers 1, weist ein Stromerfassungsglied 7 und ein hiermit zusammenarbeitendes Zeiterfassungsglied 8 auf. Wenn der Strom I größer oder gleich einem Schwellwert A wird, gibt der Ausgang ein Auslösesignal ab, das einem Und-Gatter 9 zugeführt wird. Wenn die Überschreitung des Schwellwertes A zumindest eine vorgegebene Zeit t für einen Schwellwert B überschreitet, gibt auch das Zeiterfassungsglied ein Auslösesignal ab, das dem Und-Gatter 9 zugeführt wird. Wenn das Und-Gatter an seinen beiden Eingängen ein Auslösesignal empfängt, steht an dessem Ausgang das eigentliche Auslösesignal an, das beispielsweise den Auslöser in einer Abschaltvorrichtung 4 zum Ansprechen bringt, so daß die Schaltkontakte 3 geöffnet werden. Wenn die Schwelle A zwischen 0,1 bis 10 mA und für die Zeitdauer eine Schwelle B zwischen 0,1 und 5 sek eingestellt wird, also beispielsweise 1 mA und 1 sek, können hohe Stromstärken im Ampere oder Kiloamperebereich bei kurzer Stromflußdauer, beispielsweise im Bereich von 10 bis 100 µ sek, nicht zu Fehlauslösungen führen. Andererseits können niedrige Stromstärken im Bereich von mA, die länger als 5 sek, bzw. 1 sek im Ausführungsbeispiel, anstehen, zur erforderlichen Abschaltung führen.

Es können so Varistoren in Schutzeinrichtungen für Ein- und Mehrphasensysteme ihrerseits überwacht und geschützt werden.

Die Anlage kann so ausgestaltet werden, daß ein defekter Varistor, bzw. sein Abschalten, gemeldet wird. Man kann auch Vorrichtungen zum Umschalten auf Reserveeinrichtungen vorsehen.

## Patentansprüche

1. Schutzeinrichtung gegen Überspannungen in elektrischen Anlagen, unter Einsatz von Varistoren in einem Nebenzweig, die ihrerseits durch eine Überwachungseinrichtung auf nicht betriebsmäßigen Anstieg des Leckstromes überwacht und die gegebenenfalls abgeschaltet werden, **dadurch gekennzeichnet,** daß die Überwachungseinrichtung (6) außer der Überschreitung eines bestimmten Leckstromes hierbei auch der Überschreitung einer bestimmten vorgegebenen Zeitdauer ein Auslösesignal zuordnet und daß beide in einem Und-Gatter verarbeitet werden, an dessen Ausgang das eigentliche Auslösesignal abgegeben wird, wobei für den Leckstrom eine Schwelle (A) zwischen 0,1 bis 10 mA und für die Zeitdauer eine Schwelle (B) zwischen 0,1 und 5 sek eingestellt wird.

## Claims

1. Protection device against excess voltages in electrical systems, using varistors in a subsidiary branch, which in turn are monitored by means of a monitoring device for a non-operational increase in the leakage current and which are cut out if necessary, characterised in that the monitoring device (6) provides a tripping signal when a specific leakage current is exceeded and also when a specific pre-set period of time is exceeded, and in that the two signals are processed in an AND gate, at the output of which the actual tripping signal is emitted, whereby for the leakage current a threshold (A) is set between 0.1 and 10 mA and for the time period a threshold (B) is set between 0.1 and 5 seconds.

## Revendications

1. Dispositif de protection contre les surtensions d'installations électriques, moyennant l'utilisation de varistances placées dans une branche secondaire et qui, pour leur part, sont contrôlées par un dispositif de contrôle déterminant s'il apparaît un accroissement, non conforme au fonctionnement, du courant de fuite, et sont éventuellement déconnectées, caractérisé par le fait que le dispositif de contrôle (6) associe un signal de déclenchement non seulement au dépassement d'un courant de fuite déterminé, mais également au dépassement d'une durée fixe prédéterminée, et que les deux signaux sont traités dans une porte ET, dont la sortie délivre le signal de déclenchement proprement dit, un seuil (A) compris entre 0,1 et 10 mA étant réglé pour le courant de fuite, tandis qu'un seuil (B) compris entre 0,5 et 5 s est réglé pour la durée.
